# EUROPEAN PATENT SPECIFICATION

(11) **EP 4 480 868 B1**
(45) Date of publication and mention of the grant of the patent: **27.05.2026**
(21) Application number: 23180195.2
(22) Date of filing: 20.06.2023
(51) Int. Cl.: B65G 54/02

(54) **CARRIER MODULE FOR A LINEAR MOTOR CONVEYING SYSTEM, LINEAR MOTOR CONVEYING SYSTEM AND CORRESPONDING METHOD**
TRÄGERMODUL FÜR EIN LINEARMOTORFÖRDERSYSTEM, LINEARMOTORFÖRDERSYSTEM UND ENTSPRECHENDES VERFAHREN
MODULE DE SUPPORT POUR UN SYSTÈME DE TRANSPORT À MOTEUR LINÉAIRE, SYSTÈME DE TRANSPORT À MOTEUR LINÉAIRE ET PROCÉDÉ CORRESPONDANT

(43) Date of publication of application: 25.12.2024
(73) Proprietor: Robert Bosch GmbH, 70442 Stuttgart (DE)
(72) Inventor: Tielen, Niels, 4871 LM Etten-Leur (NL); Spruit, Louis, 5502 CA Veldhoven (NL)

(56) References cited:
- JP-A- H0 564 312
- JP-A- H11 122 717
- US-A1- 2019 367 297
- US-B1- 11 512 739

## Description

The present invention relates to a carrier module for a linear motor conveying system, to a linear motor conveying system and to a method for operating a linear motor conveying system. The linear motor conveying system comprises one or more track modules and one or more carrier modules to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive. Documents JP H11 122717 A, which discloses the preamble of claim1, JP H05 64312 A), US 11 512 739 B), and US 2019/376297 A1 relate to conveying systems having carriers.

### Disclosure of the invention

According to the invention, a carrier module, a linear motor conveying system and a corresponding method with the features of the independent claims are proposed. Advantageous embodiments are subject-matter of dependent claims and of the following description.

The invention relates to linear motor conveying systems and carrier modules used therein. Such a linear motor conveying system comprises one or more track modules and one or more carrier modules to be guided in the one or more track modules. The track modules can be standardized modules, several of such modules can be connected to each other to form a track system. A track module has or defines at least one conveying path, i.e., a path along which the carrier systems are to be guided and moved. Such track modules can be of different types, e.g., straight modules, curve modules, and switch modules. Such different modules in required numbers can be connected to from a track system according to specific needs. While straight modules and curve modules typically have one conveying path, a switch module can have at least two conveying paths, or one conveying path split into two conveying paths.

An embodiment of the invention relates to such a carrier module. Such carrier module comprises a carrier component and at least two wheels, preferably at least four wheels. The wheels can be (rotatably) mounted on respective legs of the carrier component, for example. In an embodiment, the wheels can also be pivotally mounted at the carrier component such as to be pivotable about an axis parallel to a conveying direction of the carrier module. Such conveying direction can be defined as a direction of movement of the carrier module along the conveying path when received in the track modules. Typically, such conveying direction is horizontally orientied.

The carrier module is configured to be received between a first side component and a second side component of a track module. Track modules will be described in more detail later. At least a first one of the two wheels and at least a second one of the two wheels are arranged at the carrier component opposite to each other, such that the at least one first wheel faces the first side component and the at least one second wheel faces the second side component, when received in the track module.

In the embodiment of at least four wheels, at least two first one of the at least four wheels and at least two second one of the at least four wheels are arranged at the carrier component opposite to each other, such that the at least two first wheel face the first side component and the at least two second wheel face the second side component, when received in the track module, and such that a higher one of the at least two first wheels is arranged opposite to a higher one of the at least two second wheels, and that a lower one of the at least two first wheels is arranged opposite to a lower one of the at least two second wheels. Where wheels are referred to as higher and lower wheels, this in particular means that a higher wheel is located above a corresponding lower wheel, when in a direction orthogonal to the conveying direction; this is then typically a vertical direction. This allows a more stable arrangement of the carrier module in a track module.

In an embodiment, at least one of said carrier modules further comprises two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module. This allows electromagnetic conveying of the carrier module.

Further, the carrier module is configured to push a pre-tensioned one of the at least one first wheel and the at least one second wheel, in an outward direction, towards a respective one of the first side component and the second side component, and away from the other one of the at least one first wheel and the at least one second wheel that is arranged opposite. In the embodiment of at least four wheels, preferably a lower one of the wheels is such pre-tensioned wheel.

According to the invention, the carrier module further comprises a spring means, wherein the spring means is arranged at the carrier component such as to provide a pre-tension force to the pre-tensioned wheel to push the pre-tensioned wheel in the outward direction. Such pre-tension means can comprise, for example, one or two or more springs, e.g., compression springs.

According to the invention, the carrier component comprises a wheel support means, carrying the pre-tensioned wheel, wherein the pre-tensioned wheel is pivotally supported by means of the wheel bearing, and wherein the spring means is arranged such as to provide the pre-tension force to pivot the pre-tensioned wheel via the wheel support means. The pre-tensioned wheel can be pivotally supported by means of the wheel bearing about an axis parallel to the conveying direction.

As mentioned above, track modules can be standardized modules, like straights, curves and switches. Customers can combine these modules for their required transportation solution. A problem that has been encountered is that in such track the guidance typically is fixated. Due to shape of the frame, and the number of contact points (between wheels and bearings of the track modules) the degrees of freedom would be over defined. This would lead to a non-smooth motion of the carrier module through the track module and ability for the carrier module to get stuck.

Providing such pre-tensioned wheel allows a smooth motion of the carrier module through the track modules, as well a continuous and uniform contact between all wheels and guide rails or bearings. The pretension is preferably used on only one of the wheels, for example the lower left wheel (where the left side can be defined with respect to a main conveying direction of the carrier module).

In an embodiment, the carrier module further comprises an outward stroke, configured to limit a movement of the pre-tensioned wheel in the outward direction. In an embodiment, the carrier module further comprises an inward stroke, configured to limit a movement of the pre-tensioned wheel in inward direction, wherein the inward direction is opposite to the outward direction. Such strokes can be achieved by providing a dowel pin within a bore hole or the like, such that inward and outward stroke can be provided.

Another embodiment of the invention relates to a linear motor conveying system, comprising one or more track modules, and one or more carrier modules as described above, to be received and guided in the one or more track modules. Preferably, the one or more carrier modules are the ones having at least four wheels. The one or each of the more carrier modules are received or receivable in the one or each of the more track modules. In order to connect several track modules to each other, appropriate connection means like screws or from fittings can be provided for mechanical connection. Also, electrical connection of the electro-magnetic motor components should be provided.

In an embodiment, the linear motor conveying system further comprises a controlling system for controlling the linear motor conveying system to move the one or each of the more carrier modules within the one or more track modules. This can comprise controlling (and powering) the electro-magnetic motor components, e.g., the coils, of the track modules in appropriate way.

In an embodiment such track module comprises a track component, and at least four bearing surfaces. Said track component comprises, along at least part of a conveying path, a first side part, a second side part and a bottom part, wherein the first side part and the second side part are arranged opposite to each other. The bottom part preferably is configured to be placed on and/or to be oriented towards and/or to be mounted to a ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts being the legs of the U).

At least two first one of the at least four bearing surfaces are arranged at or formed integrally with the first side part, and at least two second one of the at least four bearing surfaces is arranged at or formed integrally with the second side part, such that the at least two first bearing surface and the at least two second bearing surface face each other, and such that a higher one of the at least two first bearing surfaces can match the higher first wheel, that a lower one of the at least two first bearing surfaces can match the lower first wheel, that the higher one of the at least two second bearing surfaces can match the higher second wheel, and lower one of the at least two second bearing surfaces can match the lower second wheel.

The track module can also comprise more than four bearing surfaces, for example, three first and three second bearing surfaces. The number of bearing surfaces typically should match with the number and/or arrangement of wheels of a carrier module.

The track module allows receiving a state of levitation of the carrier module between the two side parts of the track module, which reduces cogging. Switches (i.e., track modules of switch type) can be taken easily, other than with track modules providing guidance from one side only, for example This also enables high speed curves. Having guidance only from one side, for example, would result in limited speed in curves, due to the centrifugal force which acts upon the carrier while moving through a curve.

In an embodiment, such track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, there is quite some pressure on the wheels. This means that the wheels (for example, made of plastic) would wear down relatively fast.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, in at least a deviating part of said one track module or in at least a deviating part of at least one of said more track modules, a first bearing distance between the higher first bearing surface and the lower first bearing surface, and/or a second bearing distance between the higher second bearing surface and the lower second bearing surface are different from the first bearing distance and/or the second bearing distance in at least a normal part of said one track module or in at least a normal part of at least one of said more track modules. Such distance between higher and lower bearing surface can be seen in the mentioned direction orthogonal to the conveying direction, i.e., typically in vertical direction. Further, the distance can be defined, for example, with respect to a contact surface of the bearing surface or a center of it (e.g., if it is configured as rod).

In an embodiment, the linear motor conveying system is configured such that when said one or said more carrier modules are received in a normal part of said one or one of said more track modules, the movement of the pre-tensioned wheel is not limited by the outward stroke. In an embodiment, the linear motor conveying system is configured such that when said one or said more carrier modules are received in a deviating part of said one or one of said more track modules, the movement of the pre-tensioned wheel is closer to the outwards stroke than in the normal part.

In this way, the pretension can always present when the carrier moves through the system in normal parts. When a carrier however enters a switch, the pretension needs to be released. This can be done by varying the vertical distance between the top and bottom guide rails, i.e., the higher and lower bearing surfaces. This in turns releases the pretension and allows for the carrier to be "switched" with the lateral force of the carrier. Depending on the way of how the pre-tensioned wheel is pushed outwards, the higher and lower bearing surfaces have to become closer to each other or further away from each other; this will be explained with respect to the Figs. in more detail.

Another embodiment of the invention relates to a method for operating the linear motor conveying system. The method comprises causing moving said one or at least one of said more carrier modules. Whe, the carrier module is moved from a normal part to a deviating part, the spring means is moved towards the outward stroke. In this way, the pre-tension is lowered or even released, if the outward stroke is arrived. Then, the carrier module can move on to a switch module where the bearing surface on one side will broaden. In that the pre-tension is released, no sudden release will appear and the carrier module can safely move into the switch module.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system in a perspective view;
- Fig. 2: shows a track module in a perspective view;
- Fig. 3a: shows a track module and a carrier module according to an embodiment in a perspective view;
- Fig. 3b: shows the track module and the carrier module of Fig. 3a in a cross section;
- Fig. 3c: shows the carrier module of Fig. 3a in a perspective view;
- Fig. 3d: shows the carrier module of Fig. 3c in a more detailed view;
- Fig. 4: shows a track module and a carrier module according to an embodiment; and
- Fig. 5: show a method for operating a linear motor conveying system according to an embodiment.

### Detailed description of the drawing

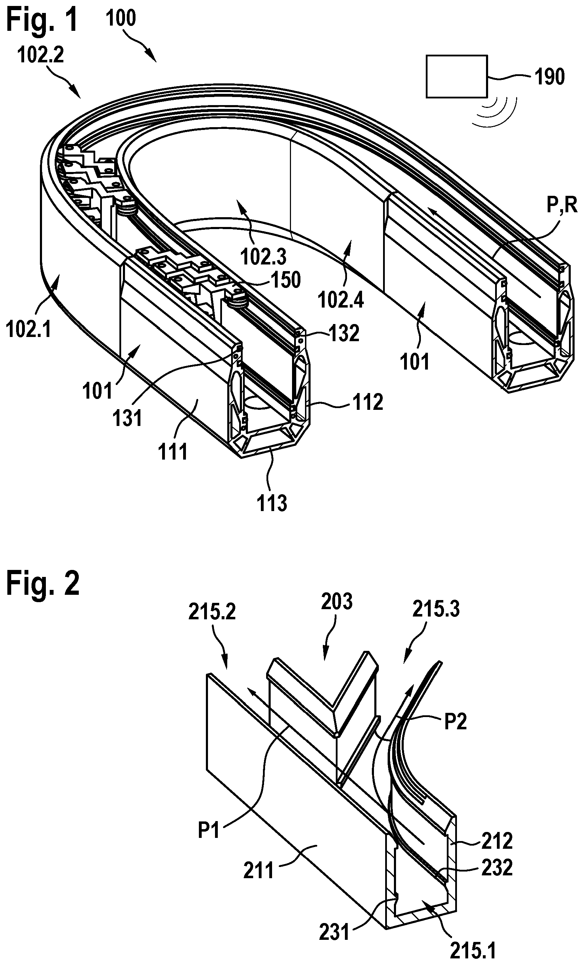

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four track modules 102.1, 102.2, 102.3, 102.4 are curve modules. The straight modules 101 are both identical, in the example shown in Fig. 1. It is noted, however, that straight modules can have a different length, where a length is to be seen in moving or conveying direction along a conveying path P, indicated for a straight module 101 in Fig. 1.

The curve modules 102.1, 102.2, 102.3, 102.4 are different from each other, in the example shown in Fig. 1. The curve modules 102.1, 102.2, 102.3, 102.4 have different radii and/or curve shapes, for example. It is noted, however, that these four different curve modules are only for illustration. According to needs, different curve modules having different radii and/or different shape can be provided. However, the curve modules have in common that they all provide curved tracks, in particular, only curved tracks.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other. By means of example, the track component 110, and also each of the first side part 111, the second side part 112 and the bottom part 113, are formed to have a structure with struts or ribs, rather than a full material structure. This allows using less material while still having a robust structure.

At least a first one of the at least two bearing surfaces (here, e.g., bearing surface 131) is arranged at or formed integrally with the first side part 111, and at least a second one of the at least two bearing surfaces (here, e.g., bearing surface 132) is arranged at or formed integrally with the second side part 112, such that the at least one first bearing surface 131 and the at least one second bearing surface 132 face each other.

By means of example, the bearing surfaces are formed by support structures like rods, arranged in or inserted into recesses in the first side part 111 and the second side part 112. In general, however, such bearing surface can also be formed by the first side part 111 and the second side part 112, e.g., by having specific shapes.

It is noted that this way of how a track module is formed, does not only apply to straight module 101 but also to other types of modules like the curve modules 102.1, 102.2, 102.3, 102.4.

Each of the straight modules and the curve modules shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying directions R, again the both directions mentioned.

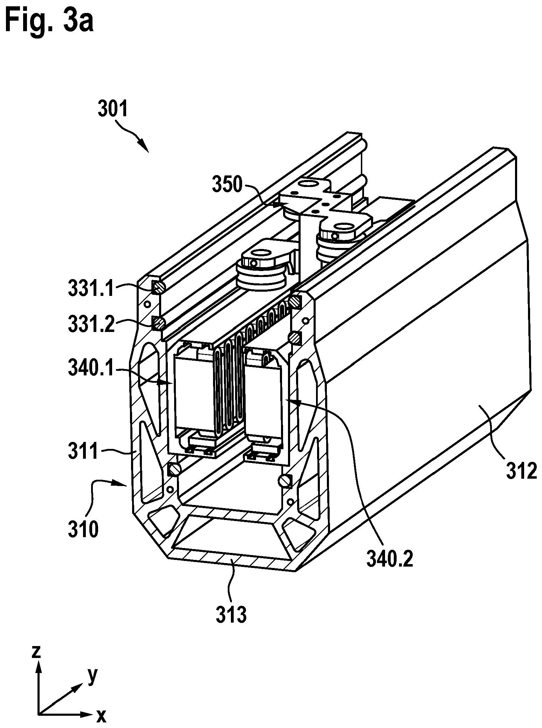

Further, the linear motor conveying system 100 comprises, by means of example, several carrier modules 150 (six carrier modules are shown in Fig.1, while only one of them is indicated with a reference numeral). The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3d.

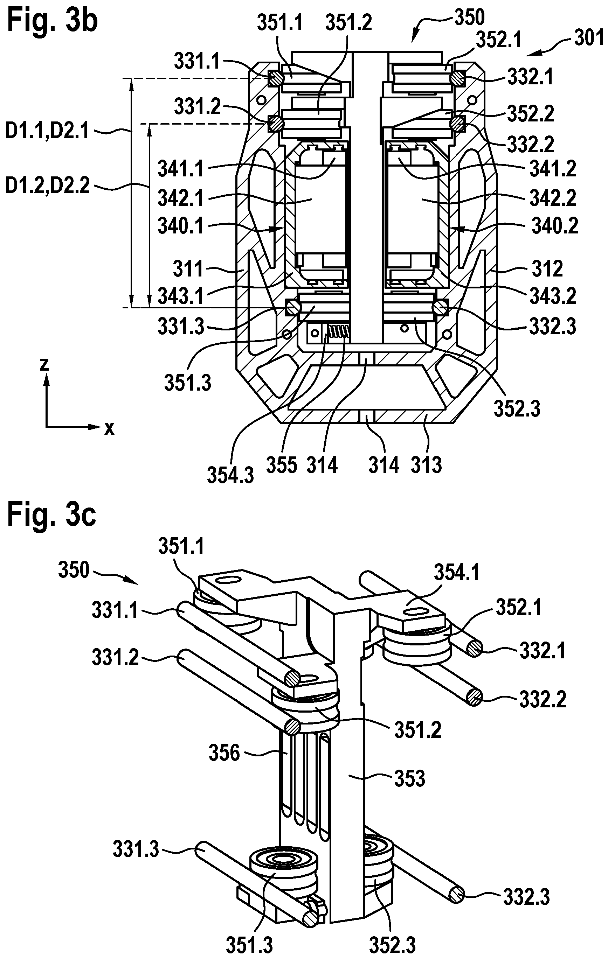

Further, the linear motor conveying system 100 can comprise, in an embodiment, a controlling system 190 for controlling the linear motor conveying system 100 to move the carrier modules 150 within the track modules 101, 102.1, 102.2, 102.3, 102.4, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled. Such electro-magnetic motor components are not shown in Fig. 1 but will be shown in Figs. 3a, 3b.

Fig. 2 schematically illustrates a track module 203 according to an embodiment in a perspective view. Track module 203 is a switch module, i.e., a track module of the switch type. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, in order to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig.1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

By means of example, the track component 210, and also each of the first side part 211, the second side part 212 and the bottom part 113, are formed to have a full material structure, different to the track modules shown in Fig. 1. Depending on the way how the bearing surfaces are formed, e.g., their inclination, wheels of the carrier modules might have to have a corresponding inclination or arrangement.

At least a first one of the at least two bearing surfaces (here, e.g., bearing surface 231) is arranged at or formed integrally with the first side part 211, and at least a second one of the at least two bearing surfaces (here, e.g., bearing surface 232) is arranged at or formed integrally with the second side part 212, such that the at least one first bearing surface 231 and the at least one second bearing surface 232 face each other.

By means of example, and different to the bearing surfaces shown in Fig. 1, the bearing surfaces are formed by the first side part 211 and the second side part 212, by having specific shapes or geometry. Such switch module, however, could also comprise bearing surfaces formed like for the track modules shown in Fig. 1. Also, such switch module could comprise a track component formed like for the track modules shown in Fig. 1, i.e. with struts or rib structure.

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type.

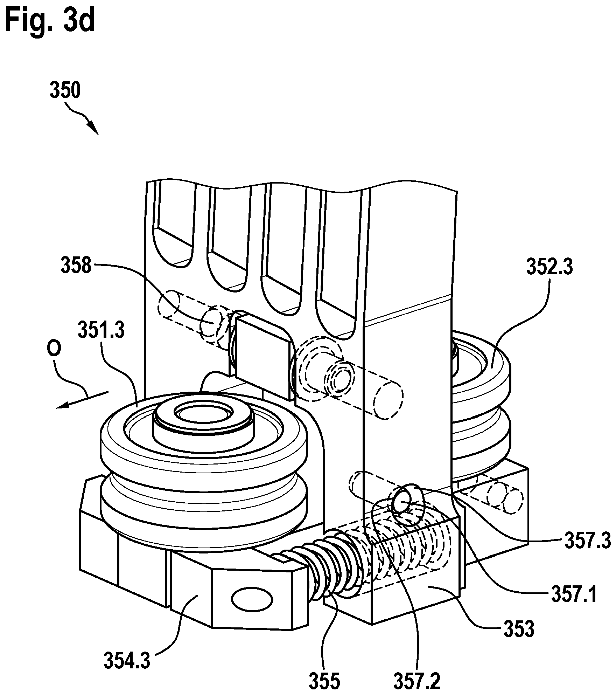

Fig. 3a illustrates a track module 301 and a carrier module 350 according to an embodiment in a perspective view. Fig. 3 b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3d illustrates a lower part of the carrier module 350 of Fig. 3c in more detail. Figs. 3a, 3b, 3c and 3d shall be described together in the following.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3, but extends along the y-direction and can be similar or equal to conveying path P shown in Fig. 1.

By means of example, the track component 310, and also each of the first side part 311, the second side part 312 and the bottom part 313, are formed to have a structure with struts or ribs, rather than a full material structure. This allows using less material while still having a robust structure. For example, the bottom part 313 and parts of each of the first side part 311 and the second side part 312 have a double wall structure with supporting ribs between the two walls.

Three first bearing surfaces (here, e.g., bearing surfaces 331.1, 331.2, 331.3) are arranged at or formed integrally with the first side part 311, and three second bearing surfaces (here, e.g., bearing surfaces 332.1, 332.2, 332.3) are arranged at or formed integrally with the second side part 312, such that the at first bearing surfaces 331.1, 331.2, 331.3 and the second bearing surfaces 332.1, 332.2, 332.3 face each other, i.e., are oriented towards each other. In other words, all of the bearing surfaces are provided at an inner side of the respective first and second side parts, where the conveying path is formed.

By means of example, the bearing surfaces are formed by support structures like rods, arranged in or inserted into recesses in the first side part 311 and the second side part 312. In general, however, such bearing surface can also be formed by the first side part 311 and the second side part 312, e.g., by having specific shapes.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1; a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes 314 facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

While Figs. 3a, 3b shown the carrier module 350 being received in the track module 301, Fig. 3c shows the carrier module 350 as such. In addition, Fig. 3c shows the six bearing surfaces 331.1, 331.2, 331.3, 332.1, 332.2, 332.3 (these are rods, in this example). The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six bearing surfaces 331.1, 331.2, 331.3, 332.1, 332.2, 332.3. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301; this reduces cogging.

As can be seen Figs. 3b, 3c, the three first bearing surfaces 331.1, 331.2, 331.3 are arranged one above the other, seen in the z-direction (which direction is orthogonal to the conveying direction). Whereas first bearing surface 331.3 can be a lower first bearing surface, first bearing surface 331.1 or first bearing surface 331.2 can be a higher bearing surface. This holds also true for the corresponding second bearing surfaces.

Similarly, as can be seen Figs. 3b, 3c, the three first wheels 351.1, 351.2, 351.3 are arranged one above the other, seen in the z-direction (which direction is orthogonal to the conveying direction). Whereas first wheel 351.3 can be a lower first wheel, first wheel 351.1 or first wheel 351.2 can be a higher wheel. This holds also true for the corresponding second wheels.

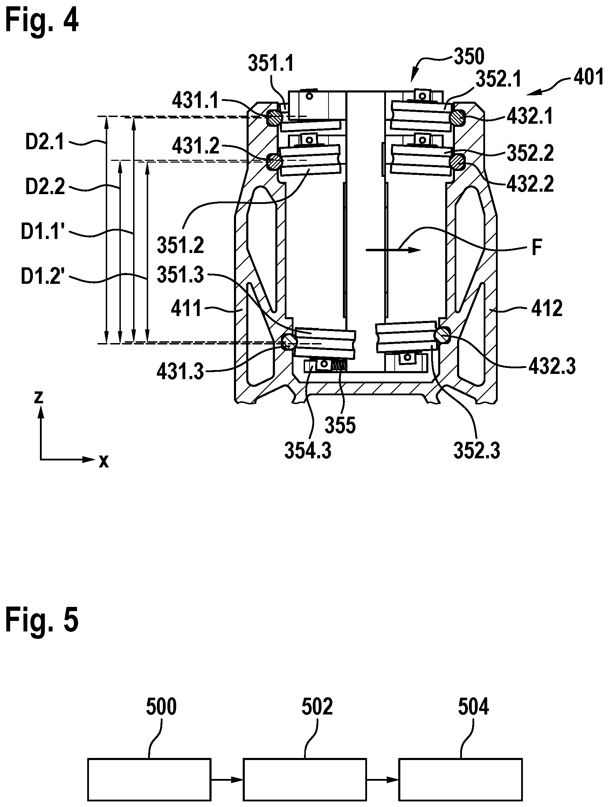

Further, Fig. 3b illustrates a bearing distance D1.1 between the higher first bearing surface 331.1 and the lower first bearing surface 331.3. Fig. 3b also illustrates another bearing distance D1.2 between the higher first bearing surface 331.2 and the lower first bearing surface 331.3. In this example, the bearing distances are defined via a center of the rods which from the bearing surfaces. As will be explained later with respect to Fig. 4, the way of how do define the bearing distances is not of particular relevance, as a potential change of such bearing distances matters.

Further, Fig. 3b illustrates a wheel distance D2.1 between the higher first wheel 351.1 and the lower first wheel 351.3. Fig. 3b also illustrates another wheel distance D2.2 between the higher first wheel 351.2 and the lower first wheel 351.3. In this case, the wheels are in a normal position where all wheel match the respective bearing surface. For example, the wheel distances can be defined with respect to pivoting axes of the wheels.

Further, the carrier module 350 is configured to push the lower first wheel 351.3, in an outward direction, towards the respective first side component 311, and away from the corresponding lower second wheel 352.3 that is arranged opposite. By means of example, carrier module 350 further comprises a spring means, e.g., a compression spring 355 (see Figs. 3b, 3d). The compression spring 255 is arranged at the carrier component 353 such as to provide a pre-tension force to the lower first wheel 351.3, the he pre-tensioned wheel.

The carrier component 353 comprises a wheel support means 354.3, wherein the lower first wheel 351.3 is pivotally supported by means of the wheel support means 354.3, e.g., about axis (or bearing) 358. Axis 358 can be parallel to the conveying direction. The compression spring 355 is arranged such as to provide the pre-tension force to pivot the lower first wheel 351.3 via the wheel support means 354.3. In this example, the compression spring 355 is located below (seen in vertical direction) the axis 358, thus the pre-tension force pivots the lower first wheel 351.3 upwards, at the side where the wheel is contact the bearing surface. Another arrangement might result in pivoting the wheel downwards.

Further, the carrier module 350 comprises an outward stroke, configured to limit a movement of the pre-tensioned wheel in the outward direction O. Further, the carrier module 350 also comprises an inward stroke, configured to limit a movement of the pre-tensioned wheel in inward direction, wherein the inward direction is opposite to the outward direction O. By means of example, these strokes are formed by having a dowelpin 357.1 fixed to the wheel support means 354.3 and provided inside a bore hole that has an outward edge 357.2 and an inward edge 357.3. The dowelpin 357.1 is movable within this hole but limits the movement of the wheel when abutting the outward edge 357.2 or the inward edge 357.3. Instead of such dowelpin, other means can be used, e.g., screws that allow fine adjustment of the strokes.

Whereas the lower first wheel 351.3 is pivotable about the axis 358, which is parallel to the conveying direction, via the wheel support means 354.3 and is also pre-tensioned, all other wheels can also be mounted pivotable about an axis, which is parallel to the conveying direction, however, without the pre-tension.

Further, from Fig. 3d it can be seen that the wheels (be it the pre-tensioned one or the other ones) are pivotable about a vertical axis, which allows smooth movement of the wheels along the bearing surfaces.

Fig. 4 schematically illustrates a track module 401 and carrier module 350 according to an embodiment. Track module 401, basically, corresponds to track module 301 of Fig. 3b, with like components denoted with like reference numerals, except for a leading 4 instead of a leading 3. Carrier module 350 is the one of Fig. 3b.

A difference between the Track module 401 and the track module 301, however, are the bearing distances D1.1' and D1.2' which are less than the corresponding bearing distances D1.1 and D1.2 in track module 301. The wheel distances, however are still the same.

This results in the wheels of the carrier module 350 slightly being pivoted and, in particular, the pre-tension of the pre-tensioned wheel 351.3 being decreased or even released. If the bearing distances D1.1' and D1.2' are sufficiently less than the corresponding bearing distances D1.1 and D1.2, the pre-tensioned wheel 351.3 will be pushed in the outward direction until the outwards stroke is arrived.

In this way, a track module like 401 can be arranged after a track module like 301 but before a switch type track module; then, the pre-tension is released before the carrier module arrives the switch.

It is noted that there should not be an abrupt change in the bearing distances between two track modules or different parts thereof (a normal part and a deviating part). Rather, these bearing distances should continuously vary, e,g., decrease, from a normal part to a deviating part, what can be achieved by appropriate track modules.

The pretension can, thus, always present when the carrier module moves through the system. When a carrier module, however enters a switch and needs to switch, the pretension needs to be released. This can be done by decreasing the vertical distance between the top and bottom guide rails. This in turn can extend the spring until it reaches the end of stroke. This in turns releases the pretension and allows for the carrier to be "switched" with the lateral force of the carrier.

However, if the carrier module does not switch but continuous in a straight line the following can happen. The lateral motor force F, see Fig. 4, will now compress the spring (until it reaches the other end-of-stroke).

Fig. 5 illustrates a method for operating a linear motor conveying system according to an embodiment. In a step 500, a carrier module is moved in the track modules. This is in track modules having a normal part (defining the bearing distance). In a step 502, the carrier module is moved from a normal part to a deviating part, i.e., the bearing distances changes, e.g., decreases. This can happen continuously. Then, the pre-tensioned wheel is moved towards the outward stroke, preferably the outward stroke being arrived.

In step 504, the carrier module is moved into a track module configured as switch module, after the pre-tensioned wheel has been moved towards the outward stroke, preferably the outward stroke having been arrived. Since the pre-tension has been removed, the switch module can smoothly be entered.

## Claims

1. A carrier module (350) for a linear motor conveying system, wherein said carrier module comprises a carrier component (353) and at least two wheels (351.1, 351.2, 351.3, 352.1, 352.2, 352.3).,
wherein said carrier module (350) is configured to be received between a first side part and a second side part of a track module (101, 102.1, 102.2, 102.3, 102.4, 203, 301),
wherein at least a first one of the at least two wheels and at least a second one of the at least two wheels are arranged at the carrier component opposite to each other, such that the at least one first wheel faces the first side component and the at least one second wheel faces the second side component, when received in the track module, and
wherein the carrier module (350) is configured to push a pre-tensioned one (351.3) of the at least one first wheel and the at least one second wheel, in an outward direction (O), towards a respective one of the first side component and the second side component, and away from the other one of the at least one first wheel and the at least one second wheel that is arranged opposite,
**characterized in** further comprising a spring means (355), wherein the spring means is arranged at the carrier component (353) such as to provide a pre-tension force to the pre-tensioned wheel to push the pre-tensioned wheel (351.3) in the outward direction (O),
wherein the carrier component (353) comprises a wheel support means (354.3) carrying the pre-tensioned wheel (351.3), wherein the pre-tensioned wheel is pivotally supported by means of the wheel support means, and
wherein the spring means is arranged such as to provide the pre-tension force to pivot the pre-tensioned wheel via the wheel support means.

2. The carrier module (350) of claim 1, further comprising an outward stroke, configured to limit a movement of the pre-tensioned wheel in the outward direction.

3. The carrier module (350) of any one of the preceding claims, further comprising an inward stroke, configured to limit a movement of the pre-tensioned wheel in inward direction, wherein the inward direction is opposite to the outward direction.

4. The carrier module (350) of any one of the preceding claims, wherein each of the at least two wheels are pivotally mounted at the carrier component such as to be pivotable about an axis parallel to a conveying direction of the carrier module.

5. The carrier module (350) of any one of the preceding claims, further comprising two counterpart electro-magnetic motor components,
wherein a first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

6. The carrier module (350) of any one of the preceding claims, wherein the at least two wheels comprise at least four wheels,
wherein at least two first one of the at least four wheels and at least two second one of the at least four wheels are arranged at the carrier component opposite to each other, such that the at least two first wheel face the first side component and the at least two second wheel face the second side component, when received in the track module, and such that a higher one of the at least two first wheels is arranged opposite to a higher one of the at least two second wheels, and that a lower one of the at least two first wheels is arranged opposite to a lower one of the at least two second wheels,
wherein the pre-tensioned wheel is one of the at least two first wheels or one of the the at least two second wheels.

7. A linear motor conveying system (100), comprising one or more track modules and one or more carrier modules of claim 6, said one or more carrier modules to be guided in the one or more track modules,
wherein said one or each of said more track modules is configured to receive a carrier module (350) between a first side part (111, 311) and a second side part (112, 312), and
wherein the one or each of the more carrier modules are received or receivable in the one or each of the more track modules.

8. The linear motor conveying system (100) of claim 7, wherein said one or each of said more track modules comprises a track component, and at least four bearing surfaces,
wherein said track component comprises, along at least part of a conveying path (P, P1, P2), the first side part (111, 311), the second side part (112, 312) and a bottom part (113, 313), wherein the first side part and the second side part are arranged opposite to each other,
wherein at least two first one (131, 331.1, 331.2, 331.3) of the at least four bearing surfaces are arranged at or formed integrally with the first side part (111, 311), and at least two second one (132, 332.1, 332.2, 332.3) of the at least four bearing surfaces are arranged at or formed integrally with the second side part (112, 312), such that the at least two first bearing surface and the at least two second bearing surface face each other, and
such that a higher one of the at least two first bearing surfaces can match the higher first wheel, that a lower one of the at least two first bearing surfaces can match the lower first wheel, that the higher one of the at least two second bearing surfaces can match the higher second wheel, and lower one of the at least two second bearing surfaces can match the lower second wheel.

9. The linear motor conveying system (100) of claim 8, wherein in at least a deviating part of said one track module or in at least a deviating part of at least one of said more track modules, a first bearing distance (D1.1') between the higher first bearing surface and the lower first bearing surface, and/or a second bearing distance between the higher second bearing surface and the lower second bearing surface are different from the first bearing distance (D1.1) and/or the second bearing distance in at least a normal part of said one track module or in at least a normal part of at least one of said more track modules.

10. The linear motor conveying system (100) of claim 9, referring back to claim 2, configured such that when said one or said more carrier modules are received in a normal part of said one or one of said more track modules, the movement of the pre-tensioned wheel is not limited by the outward stroke.

11. The linear motor conveying system (100) of claim 10, configured such that when said one or said more carrier modules are received in a deviating part of said one or one of said more track modules, the movement of the pre-tensioned wheel is closer to the outwards stroke than in the normal part.

12. The linear motor conveying system (100) of any one of claims 8 to 11, wherein said one or each of said more track modules being configured as one of the following track module types: a straight module, a curve module, a switch module.

13. A method for operating the linear motor conveying system (100) of claim 10, wherein said one or at least one of said more carrier modules is moved in said one or said more track modules,
wherein, when, the carrier module is moved from a normal part to a deviating part, the pre-tensioned wheel is moved towards the outward stroke, preferably the outward stroke being arrived, and
wherein said carrier module is moved into a track module configured as switch module, after the pre-tensioned wheel has been moved towards the outward stroke, preferably the outward stroke having been arrived.

## Patentansprüche

1. Trägermodul (350) für ein Linearmotorfördersystem, wobei das Trägermodul eine Trägerkomponente (353) und mindestens zwei Räder (351.1, 351.2, 351.3, 352.1, 352.2, 352.3) aufweist.,
wobei das Trägermodul (350) dazu eingerichtet ist, zwischen einem ersten Seitenteil und einem zweiten Seitenteil eines Schienenmoduls (101, 102.1, 102.2, 102.3, 102.4, 203, 301) aufgenommen zu sein,
wobei mindestens ein erstes der mindestens zwei Räder und mindestens ein zweites der mindestens zwei Räder an der Trägerkomponente einander gegenüberliegend angeordnet sind, so dass das mindestens eine erste Rad der ersten Seitenkomponente zugewandt ist und das mindestens eine zweite Rad der zweiten Seitenkomponente zugewandt ist, wenn es in dem Schienenmodul aufgenommen ist, und
wobei das Trägermodul (350) dazu eingerichtet ist, ein vorgespanntes (351.3) des mindestens einen ersten Rades und des mindestens einen zweiten Rades in einer Auswärtsrichtung (O) in Richtung einer jeweiligen der ersten Seitenkomponente und der zweiten Seitenkomponente und weg von dem anderen des mindestens einen ersten Rades und des mindestens einen zweiten Rades, das gegenüberliegend angeordnet ist, zu drücken,
**dadurch gekennzeichnet, dass** es ferner ein Federmittel (355) aufweist, wobei das Federmittel an der Trägerkomponente (353) so angeordnet ist, dass es eine Vorspannkraft auf das vorgespannte Rad bereitstellt, um das vorgespannte Rad (351.3) in die Auswärtsrichtung (O) zu drücken,
wobei die Trägerkomponente (353) ein Radhalterungsmittel (354.3) aufweist, das das vorgespannte Rad (351.3) trägt, wobei das vorgespannte Rad mittels des Radhalterungsmittels schwenkbar gelagert ist, und
wobei das Federmittel so angeordnet ist, dass es die Vorspannkraft bereitstellt, um das vorgespannte Rad über das Radhalterungsmittel zu schwenken.

2. Trägermodul (350) nach Anspruch 1, das ferner einen Hubweg nach außen aufweist, der dazu eingerichtet ist, eine Bewegung des vorgespannten Rades in der Auswärtsrichtung zu begrenzen.

3. Trägermodul (350) nach einem der vorhergehenden Ansprüche, das ferner einen Hubweg nach innen aufweist, der dazu eingerichtet ist, eine Bewegung des vorgespannten Rades in einer Einwärtsrichtung begrenzen, wobei die Einwärtsrichtung entgegengesetzt zur Auswärtsrichtung ist.

4. Trägermodul (350) nach einem der vorhergehenden Ansprüche, wobei jedes der mindestens zwei Räder schwenkbar an der Trägerkomponente so montiert ist, dass es um eine Achse parallel zu einer Förderrichtung des Trägermoduls schwenkbar ist.

5. Trägermodul (350) nach einem der vorhergehenden Ansprüche, das ferner zwei ein Gegenstück bildende elektromagnetische Motorkomponenten aufweist,
wobei eine erste der zwei ein Gegenstück bildenden elektromagnetischen Motorkomponenten und eine zweite der zwei ein Gegenstück bildenden elektromagnetischen Motorkomponenten an der Trägerkomponente einander gegenüberliegend angeordnet sind, so dass die erste ein Gegenstück bildende elektromagnetische Motorkomponente einer ersten elektromagnetischen Motorkomponente des Schienenmoduls zugewandt ist und die zweite ein Gegenstück bildende elektromagnetische Motorkomponente einer zweiten elektromagnetischen Motorkomponente des Schienenmoduls zugewandt ist, wenn es in dem Schienenmodul aufgenommen ist.

6. Trägermodul (350) nach einem der vorhergehenden Ansprüche, wobei die mindestens zwei Räder mindestens vier Räder aufweisen,
wobei mindestens zwei erste der mindestens vier Räder und mindestens zwei zweite der mindestens vier Räder an der Trägerkomponente einander gegenüberliegend angeordnet sind, so dass die mindestens zwei ersten Räder der ersten Seitenkomponente zugewandt sind und die mindestens zwei zweiten Räder der zweiten Seitenkomponente zugewandt sind, wenn es in dem Schienenmodul aufgenommen ist, und so dass ein höheres der mindestens zwei ersten Räder einem höheren der mindestens zwei zweiten Räder gegenüberliegend angeordnet ist und dass ein niedrigeres der mindestens zwei ersten Räder einem niedrigeren der mindestens zwei zweiten Räder gegenüberliegend angeordnet ist,
wobei das vorgespannte Rad eines der mindestens zwei ersten Räder oder eines der mindestens zwei zweiten Räder ist.

7. Linearmotorfördersystem (100), aufweisend ein oder mehrere Schienenmodule und ein oder mehrere Trägermodule nach Anspruch 6, wobei das eine oder die mehreren Trägermodule in dem einen oder den mehreren Schienenmodulen zu führen sind,
wobei das eine oder jedes der mehreren Schienenmodule dazu eingerichtet ist, ein Trägermodul (350) zwischen einem ersten Seitenteil (111, 311) und einem zweiten Seitenteil (112, 312) aufzunehmen, und
wobei das eine oder jedes der mehreren Trägermodule in dem einen oder jedem der mehreren Schienenmodule aufgenommen oder aufnehmbar ist.

8. Linearmotorfördersystem (100) nach Anspruch 7, wobei das eine oder jedes der mehreren Schienenmodule eine Schienenkomponente und mindestens vier Lagerflächen aufweist,
wobei die Schienenkomponente entlang zumindest eines Teils eines Förderweges (P, P1, P2) das erste Seitenteil (111, 311), das zweite Seitenteil (112, 312) und ein Bodenteil (113, 313) aufweist, wobei das erste Seitenteil und das zweite Seitenteil einander gegenüberliegend angeordnet sind,
wobei mindestens zwei erste (131, 331.1, 331.2, 331.3) der mindestens vier Lagerflächen an dem ersten Seitenteil (111, 311) angeordnet oder integral mit diesem ausgebildet sind und mindestens zwei zweite (132, 332.1, 332.2, 332.3) der mindestens vier Lagerflächen an dem zweiten Seitenteil (112, 312) angeordnet oder integral mit diesem ausgebildet sind, so dass die mindestens zwei ersten Lagerflächen und die mindestens zwei zweiten Lagerflächen einander zugewandt sind, und
so dass eine höhere der mindestens zwei ersten Lagerflächen mit dem höheren ersten Rad zusammenpassen kann, dass eine niedrigere der mindestens zwei ersten Lagerflächen mit dem niedrigeren ersten Rad zusammenpassen kann, dass die höhere der mindestens zwei zweiten Lagerflächen mit dem höheren zweiten Rad zusammenpassen kann und eine niedrigere der mindestens zwei zweiten Lagerflächen mit dem niedrigeren zweiten Rad zusammenpassen kann.

9. Linearmotorfördersystem (100) nach Anspruch 8, wobei in mindestens einem abweichenden Teil des einen Schienenmoduls oder in mindestens einem abweichenden Teil von mindestens einem der mehreren Schienenmodule ein erster Lagerabstand (D1.1') zwischen der höheren ersten Lagerfläche und der niedrigeren ersten Lagerfläche und/oder ein zweiter Lagerabstand zwischen der höheren zweiten Lagerfläche und der niedrigeren zweiten Lagerfläche sich von dem ersten Lagerabstand (D1.1) und/oder dem zweiten Lagerabstand in mindestens einem normalen Teil des einen Schienenmoduls oder in mindestens einem normalen Teil von mindestens einem der mehreren Schienenmodule unterscheidet.

10. Linearmotorfördersystem (100) nach Anspruch 9, in Rückbezug auf Anspruch 2, das so eingerichtet ist, dass, wenn das eine oder die mehreren Trägermodule in einem normalen Teil des einen oder eines der mehreren Schienenmodule aufgenommen sind, die Bewegung des vorgespannten Rades nicht durch den Hubweg nach außen begrenzt ist.

11. Linearmotorfördersystem (100) nach Anspruch 10, das so eingerichtet ist, dass, wenn das eine oder die mehreren Trägermodule in einem abweichenden Teil des einen oder eines der mehreren Schienenmodule aufgenommen sind, die Bewegung des vorgespannten Rades näher an dem Hubweg nach außen liegt als in dem normalen Teil.

12. Linearmotorfördersystem (100) nach einem der Ansprüche 8 bis 11, wobei das eine oder jedes der mehreren Schienenmodule als einer der folgenden Schienenmodultypen eingerichtet ist: ein gerades Modul, ein Kurvenmodul, ein Weichenmodul.

13. Verfahren zum Betreiben des Linearmotorfördersystems (100) nach Anspruch 10, wobei das eine oder mindestens eines der mehreren Trägermodule in dem einen oder den mehreren Schienenmodulen bewegt wird, wobei, wenn das Trägermodul von einem normalen Teil zu einem abweichenden Teil bewegt wird, das vorgespannte Rad in Richtung des Hubwegs nach außen bewegt wird, wobei vorzugsweise der Hubweg nach außen erreicht wird, und
wobei das Trägermodul in ein Schienenmodul bewegt wird, das als ein Weichenmodul eingerichtet ist, nachdem das vorgespannte Rad in Richtung des Hubwegs nach außen bewegt wurde, wobei vorzugsweise der Hubweg nach außen erreicht wurde.

## Revendications

1. Module de support (350) pour un système de transport à moteur linéaire, ledit module de support comprenant un composant de support (353) et au moins deux roues (351.1, 351.2, 351.3, 352.1, 352.2, 352.3),
ledit module de support (350) étant configuré pour être reçu entre une première partie latérale et une deuxième partie latérale d'un module de voie (101, 102.1, 102.2, 102.3, 102.4, 203, 301),
au moins une première des au moins deux roues et au moins une deuxième des au moins deux roues étant agencées au niveau du composant de support à l'opposé l'une de l'autre, de sorte que l'au moins une première roue fait face au premier composant latéral et l'au moins une deuxième roue fait face au deuxième composant latéral, lorsqu'elle est reçue dans le module de voie, et le module de support (350) étant configuré pour pousser une roue précontrainte (351.3) parmi l'au moins une première roue et l'au moins une deuxième roue, dans une direction vers l'extérieur (O), vers un élément respectif parmi le premier composant latéral et le deuxième composant latéral et à distance de l'autre parmi l'au moins une première roue et l'au moins une deuxième roue agencée à l'opposée,
**caractérisé en ce qu'**il comprend en outre des moyens de ressort (355), les moyens de ressort étant agencés au niveau du composant de support (353) de manière à fournir une force de prétension à la roue précontrainte afin de pousser la roue précontrainte (351.3) dans la direction vers l'extérieur (O), le composant de support (353) comprenant des moyens de support de roue (354.3) portant la roue précontrainte (351.3), la roue précontrainte étant supportée pivotante au moyen des moyens de support de roue, et
les moyens de ressort étant agencés de manière à fournir la force de prétension pour faire pivoter la roue précontrainte par l'intermédiaire des moyens de support de roue.

2. Module de support (350) selon la revendication 1, comprenant en outre une course vers l'extérieur, configurée pour limiter un mouvement de la roue précontrainte dans la direction vers l'extérieur.

3. Module de support (350) selon l'une quelconque des revendications précédentes, comprenant en outre une course vers l'intérieur, configurée pour limiter un mouvement de la roue précontrainte vers l'intérieur, la direction vers l'intérieur étant opposée à la direction vers l'extérieur.

4. Module de support (350) selon l'une quelconque des revendications précédentes, chacune des au moins deux roues étant montée pivotante au niveau du composant de support de manière à pouvoir pivoter autour d'un axe parallèle à une direction de transport du module de support.

5. Module de support (350) selon l'une quelconque des revendications précédentes, comprenant en outre deux composants de moteur électromagnétique homologues,
un premier des deux composants de moteur électromagnétique homologues et un second des deux composants de moteur électromagnétique homologues étant agencés au niveau du composant de support opposé l'un à l'autre, de sorte que le premier composant de moteur électromagnétique homologue fait face à un premier composant de moteur électromagnétique du module de voie et le second composant de moteur électromagnétique homologue fait face à un second composant de moteur électromagnétique du module de voie, lorsqu'il est reçu dans le module de voie.

6. Module de support (350) selon l'une quelconque des revendications précédentes, les au moins deux roues comprenant au moins quatre roues,
au moins deux premières roues des au moins quatre roues et au moins deux deuxièmes roues des au moins quatre roues étant agencées au niveau du composant de support à l'opposé l'une de l'autre, de sorte que les au moins deux premières roues font face au premier composant latéral et les au moins deux deuxièmes roues font face au deuxième composant latéral, lorsqu'elles sont reçues dans le module de voie, et de telle sorte qu'une plus haute des au moins deux premières roues est agencée à l'opposée d'une plus haute des au moins deux deuxièmes roues et qu'une plus basse des au moins deux premières roues est agencée à l'opposée d'une plus basse des au moins deux deuxièmes roues,
la roue précontrainte étant l'une des au moins deux premières roues ou l'une des au moins deux deuxièmes roues.

7. Système de transport à moteur linéaire (100), comprenant un ou plusieurs modules de voie et un ou plusieurs modules de support selon la revendication 6, lesdits un ou plusieurs modules de support devant être guidés dans le ou les modules de voie,
ledit un ou chacun desdits plusieurs modules de voie étant configuré pour recevoir un module de support (350) entre une première partie latérale (111, 311) et une deuxième partie latérale (112, 312), et
le ou chacun des modules de support étant reçus ou recevables dans le ou chacun des modules de voie.

8. Système de transport à moteur linéaire (100) selon la revendication 7, ledit un ou chacun desdits plusieurs modules de voie comprenant un composant de voie, et au moins quatre surfaces d'appui,
ledit composant de voie comprenant, le long d'au moins une partie d'un chemin de transport (P, P1, P2), la première partie latérale (111, 311), la deuxième partie latérale (112, 312) et une partie inférieure (113, 313), la première partie latérale et la deuxième partie latérale étant agencées à l'opposé l'une de l'autre,
au moins deux premières (131, 331.1, 331.2, 331.3) des au moins quatre surfaces d'appui étant disposées au niveau ou formées d'un seul tenant avec la première partie latérale (111, 311), et au moins deux deuxièmes surfaces d'appui (132, 332.1, 332.2, 332.3) des au moins quatre surfaces d'appui étant disposées au niveau ou formées d'un seul tenant avec la deuxième partie latérale (112, 312), de sorte que les au moins deux premières surfaces d'appui et les au moins deux deuxièmes surfaces d'appui se font face, et
de telle sorte qu'une surface d'appui supérieure des au moins deux premières surfaces d'appui puisse correspondre à la première roue supérieure, qu'une surface d'appui inférieure des au moins deux premières surfaces d'appui puisse correspondre à la première roue inférieure, que la surface d'appui supérieure des au moins deux deuxièmes surfaces d'appui puisse correspondre à la deuxième roue supérieure, et que la surface d'appui inférieure des au moins deux deuxièmes surfaces d'appui puisse correspondre à la deuxième roue inférieure.

9. Système de transport à moteur linéaire (100) selon la revendication 8, dans au moins une partie déviante dudit un module de voie ou dans au moins une partie déviante d'au moins un desdits plusieurs modules de voie, une première distance d'appui (D1.1') entre la première surface d'appui supérieure et la première surface d'appui inférieure, et/ou une deuxième distance d'appui entre la deuxième surface d'appui supérieure et la deuxième surface d'appui inférieure étant différentes de la première distance d'appui (D1.1) et/ou de la deuxième distance d'appui dans au moins une partie normale dudit un module de voie ou dans au moins une partie normale d'au moins un desdits plusieurs modules de voie.

10. Système de transport à moteur linéaire (100) selon la revendication 9, renvoyant à la revendication 2, configuré de telle sorte que lorsque lesdits un ou plusieurs modules de support sont reçus dans une partie normale dudit un ou desdits plusieurs modules de voie, le mouvement de la roue précontrainte n'est pas limité par la course vers l'extérieur.

11. Système de transport à moteur linéaire (100) selon la revendication 10, configuré de telle sorte que lorsque lesdits un ou plusieurs modules de support sont reçus dans une partie déviante dudit un ou desdits plusieurs modules de voie, le mouvement de la roue précontrainte est plus proche de la course vers l'extérieur que dans la partie normale.

12. Système de transport à moteur linéaire (100) selon l'une quelconque des revendications 8 à 11, ledit un ou chacun desdits plusieurs modules de voie étant configuré comme l'un des types de module de voie suivants : un module droit, un module courbe, un module de commutation.

13. Procédé pour faire fonctionner le système de transport à moteur linéaire (100) selon la revendication 10, ledit un ou au moins un desdits plusieurs modules de support étant déplacé dans lesdits un ou plusieurs modules de voie,
lorsque le module de support est déplacé d'une partie normale à une partie déviante, la roue précontrainte étant déplacée vers la course vers l'extérieur, de préférence la course vers l'extérieur étant atteinte, et
ledit module de support étant déplacé dans un module de voie configuré en tant que module de commutation, après que la roue précontrainte a été déplacée vers la course vers l'extérieur, de préférence la course vers l'extérieur ayant été atteinte.
